# EUROPÄISCHE PATENTANMELDUNG

(11) **EP 3 098 680 A1**
(43) Veröffentlichungstag der Anmeldung: **30.11.2016**
(21) Anmeldenummer: 16171676.6
(22) Anmeldetag: 27.05.2016
(51) Int. Cl.: G05B 19/418, B23Q 39/04, B23Q 39/00

(54) **VERFAHREN UND WERKZEUGMASCHINE MIT MEHREREN BEARBEITUNGSEINRICHTUNGEN ZUR BEARBEITUNG EINES PROFILTRÄGERS**

(30) Priorität: 29.05.2015 DE 102015108531
(71) Anmelder: Kaltenbach GmbH + Co. KG, 79539 Lörrach (DE)
(72) Erfinder: LIEBSCHER, Erik, 79713 Bad Säckingen (DE); SCHMIDT, Daniel, 79576 Weil am Rhein (DE); STIEGELER, Stefan, 79594 Lörrach (DE); PREßMAR, Johannes, 79540 Lörrach (DE); SCHÜTZ, Robert, 79541 Lörrach (DE); SENFT, Rainer, 79379 Müllheim (DE); KREIS, Michael, Dr., 64646 Heppenheim (DE); GROSCH, Heike, 79576 Weil am Rhein (DE)
(74) Vertreter: Maucher Jenkins Patent- und Rechtsanwälte

(57) **Zusammenfassung**

Die Erfindung betrifft ein Verfahren und eine Werkzeugmaschine (1) zur Bearbeitung eines Werkstücks, insbesondere eines Profilträgers. Die Werkstücke (Profilträger) werden auf einem Vorschub-/Messwagen (9,10) mittels einer Einspannvorrichtung (5) eingespannt und vermessen. Der Vorschubwagen wird zu den Bearbeitungseinrichtungen (3,4) transportiert. Die Werkzeugmaschine umfasst zwei Bearbeitungseinrichtungen (3,4), wobei die erste (3) z.B. zum gleichzeitigen/simultanen/parallelen Fräsen und Bohren und die zweite (4) zum Absägen/Ablängen des Werkstücks ausgebildet ist und beide als Portale ausgebildet sind. Die erste Bearbeitungseinrichtung (3) ist entlang der Führungseinrichtung (2) und relativ zu der zweiten feststehenden Bearbeitungseinrichtung (4) beweglich. In dem Verfahren wird die Reihenfolge der Bearbeitungsschritte gemäß dem Minimierungsproblem der Bearbeitungszeit erzeugt.

## Beschreibung

Die Erfindung betrifft eine Werkzeugmaschine und Verfahren zur Steuerung einer Werkzeugmaschine. Insbesondere betrifft die Erfindung eine Werkzeugmaschine zur Bearbeitung eines Werkstücks, insbesondere eines Profilträgers, umfassend mindestens erste und zweite Bearbeitungseinrichtungen, eine Führungseinrichtung zur Führung oder Halterung der ersten und zweiten Bearbeitungseinrichtungen, mindestens eine Einspannvorrichtung zum Einspannen des Werkstücks während der Bearbeitung durch die ersten und zweiten Bearbeitungseinrichtungen, und eine Steuereinrichtung zum Steuern der Werkzeugmaschine.

Derartige Werkzeugmaschinen sind aus dem Stand der Technik bekannt und ermöglichen die vollautomatisierte Bearbeitung von Profilträgern. Ziel ist es dabei generell, eine möglichst kurze Bearbeitungszeit zu erreichen. Dieses Ziel kann durch parallel durchzuführende Arbeitsschritte erreicht werden.

Aus DE 10 2009 019 267 A1 ist eine Werkzeugmaschine zur Bearbeitung von Profilstangen bekannt, die über eine Halteeinrichtung zum Halten der Profilstangen, eine Bearbeitungseinrichtung, und eine Führungseinrichtung verfügt, wobei die Bearbeitungseinrichtung entlang der Führungseinrichtung beweglich ist und sowohl eine Trennvorrichtung wie eine Säge, als auch eine Bohr- oder Fräsvorrichtung umfasst.

Des Weiteren ist aus EP 2 641 681 B1 eine Werkzeugmaschine bekannt, die aus einem Verbund von einem feststehenden Portal, welches eine Säge umfasst und einem weiteren feststehenden Portal, welches eine Bohr-/Fräseinrichtung umfasst, gebildet ist.

Diese Werkzeugmaschinen sollen die parallele Durchführung von Säge- und Bohr- oder Fräsbearbeitungen und somit eine Verkürzung der Bearbeitungszeit ermöglichen.

Die vorliegende Erfindung hat zur Aufgabe, die Bearbeitungszeit weiter zu verkürzen.

Diese Aufgabe wird durch die in den unabhängigen Ansprüchen angegebene Erfindung gelöst. Vorteilhafte Ausgestaltungen sind in den Unteransprüchen gegeben.

Erfindungsgemäß ist bei einer Werkzeugmaschine der oben angegebenen Gattung vorgesehen, dass die erste Bearbeitungseinrichtung entlang der Führungseinrichtung und relativ zu der zweiten Bearbeitungseinrichtung beweglich ist.

Eine derartige Werkzeugmaschine dient insbesondere zum Bearbeiten von großen Werkstücken, d.h. Werkstücken, die mehrere Meter lang sein können. Bei der Bearbeitung soll beispielsweise gebohrt und gesägt werden. Diese Bearbeitungsschritte können durch die erste bzw. die zweite Bearbeitungseinrichtung durchgeführt werden. Mit Vorteil können diese Bearbeitungsschritte zumindest teilweise parallel durchführt werden. Hierdurch ergibt sich eine kürzere Bearbeitungszeit pro Werkstück.

Ein Vorteil der Erfindung besteht darin, dass die Bearbeitungen durch die ersten und zweiten Bearbeitungseinrichtungen (z.B. Bohren und Sägen) voneinander entkoppelt sind, zumindest räumlich. Je nach durchzuführender Werkstückbearbeitung ist für die Durchführung der einzelnen Bearbeitungsschritte kein Umspannen des Werkstückes erforderlich. Mit anderen Worten muss das Werkstück nur einmal eingespannt werden. Hierdurch ergibt sich die Eignung zur parallelen Bearbeitung des Werkstückes.

In einer Ausgestaltung ist die Steuereinrichtung dazu ausgebildet, während der Bearbeitung eines ersten Werkstücks durch die zweite Bearbeitungseinrichtung in einem gleichzeitige parallelen Bearbeitungsschritt die Bearbeitung des ersten Werkstücks oder eines zweiten Werkstücks durch die erste Bearbeitungseinrichtung zu steuern, wobei der die erste Bearbeitungseinrichtung während des parallelen Bearbeitungsschrittes entlang der Führungseinrichtung relativ zu der zweiten Bearbeitungseinrichtung bewegt wird. Durch die Steuerung der Bearbeitungsschritte zur parallelen oder gleichzeitigen Bearbeitung eines oder mehrerer Werkstücke kann die Werkzeugmaschine besonders effizient eingesetzt werden.

In einer Ausgestaltung umfasst die Werkzeugmaschine eine oder mehrere weitere Bearbeitungseinrichtungen, die jeweils relativ entlang der Führungseinrichtung und relativ zu der zweiten Bearbeitungseinrichtung beweglich sind, wobei die Steuereinrichtung dazu ausgebildet ist, während der Bearbeitung eines ersten Werkstücks durch die zweite Bearbeitungseinrichtung eine gleichzeitige Bearbeitung des ersten Werkstücks oder eines zweiten Werkstücks durch die weiteren Bearbeitungseinrichtungen zu steuern, bei der die weiteren Bearbeitungseinrichtung entlang der Führungseinrichtung relativ zu der zweiten Bearbeitungseinrichtung bewegt wird.

Gemäß dieser Ausgestaltung ermöglicht die Erfindung die parallele Bearbeitung von Werkstücken durch eine Vielzahl von Bearbeitungseinrichtungen. Insbesondere kann die erste Bearbeitungseinrichtung und/oder gegebenenfalls die weiteren Bearbeitungseinrichtungen jeweils zum Bearbeiten des Werkstücks mit mindestens einem rotierbaren Werkzeug und/oder die zweite Bearbeitungseinrichtung zum Ablängen des Werkstücks ausgebildet sein.

In einer Ausgestaltung ist die zweite Bearbeitungseinrichtung die in der Vorschubrichtung des Werkstücks vorderste Bearbeitungseinrichtung und feststehend. Mit anderen Worten passiert ein Werkstück während des Vorschubs und der Bearbeitung zunächst die erste Bearbeitungseinrichtung und gegebenenfalls anschließend die weiteren Bearbeitungseinrichtungen, und zuletzt die feststehende zweite Bearbeitungseinrichtung. Ist eine der Bearbeitungseinrichtungen durch eine Säge gebildet, so handelt es sich dabei vorzugsweise um die feststehende, zweite Bearbeitungseinrichtung.

In einer Ausgestaltung ist die erste Bearbeitungseinrichtung durch ein entlang der Führungseinrichtung bewegliches Portal gebildet, wobei das Portal mehrere Aufnahmeeinrichtungen für jeweils ein rotierbares Werkzeug oder ein Trennwerkzeug umfasst. Somit kann das Portal entlang der Führungseinrichtung zu einer Stelle gefahren werden, an der eine oder mehrere Bearbeitungsschritte, beispielsweise Bohrungen, durchgeführt werden sollen. Insbesondere ist es auch möglich, Bohrungen durchzuführen, die in einem mehrere Meter umfassenden Bereich von der Stelle entfernt sind, an der eine Bearbeitung durch die zweite Bearbeitungseinheit durchgeführt wird - z.B. eine Sägestelle. Mit anderen Worten können quasi an beliebigen Stellen des Werkstückes Bearbeitungen durchgeführt werden, während an einem Ende des Werkstückes gesägt wird.

Zusätzlich können die rotierbaren Werkzeuge jeweils relativ zu dem Portal und / oder relativ zueinander beweglich sein. Somit können auch bei stillstehendem Portal Bearbeitungsschritte an verschiedenen Positionen innerhalb eines durch den Bewegungsraum der rotierbaren Werkzeuge definierten Arbeitsbereichs durchgeführt werden.

Insgesamt können somit Bearbeitungsschritte zum Einen innerhalb des Arbeitsbereiches des Portals durchgeführt werden, nämlich bei stillstehendem Portal, und zum Anderen an Stellen, die bei einem unbeweglichen Portal außerhalb des Arbeitsbereiches liegen würden. Somit ist eine verbesserte gleichzeitige Durchführung von verschiedenen Bearbeitungsschritten möglich.

In einer Ausgestaltung umfasst die Werkzeugmaschine einen ersten und einen zweiten Vorschubwagen zum Vorschub eines Werkstücks entlang der Führungseinrichtung, wobei die ersten und zweiten Vorschubwagen relativ zueinander beweglich und unabhängig voneinander ansteuerbar sind. Mit dem ersten Vorschubwagen kann ein erstes Werkstück zur Sägevorrichtung transportiert und fixiert werden. Während der Bearbeitung des ersten Werkstückes bleibt der erste Vorschubwagen in seiner Position. Währenddessen kann ein zweiter Vorschubwagen bereits das nächste Werkstück in Richtung zu den Bearbeitungsstellen befördern. Weiterhin wird durch die Vorschubwagen ermöglicht, dass mehrere Werkstücke gleichzeitig bearbeitet werden, z.B. dass das erste Werkstück gesägt wird, während an dem zweiten Werkstück bereits gebohrt wird. Die Ausgestaltung des Vorschubwagens erlaubt es, dass Vorschubwagen und in Bearbeitungsposition befindliches Werkstück kollisionsfrei in Längsrichtung aneinander vorbei fahren können. Dazu...

Weiterhin kann die Werkzeugmaschine eine Werkstückzufuhreinrichtung zum Zuführen eines Werkstücks zu dem ersten Vorschubwagen in einer Richtung quer, insbesondere senkrecht zu der Führungseinrichtung,. Eine derart ausgestaltete Werkzeugmaschine ermöglicht das Zuführen eines weiteren Werkstücks, während ein vorher zugeführtes Werkstück noch bearbeitet wird.

In einer Ausgestaltung umfasst die Einspannvorrichtung einen oder mehrere Spannstöcke zum Einspannen eines Werkstücks in einer Bearbeitungsposition, wobei die Spannstöcke relativ zueinander und/oder relativ zu der ersten und/oder zweiten Bearbeitungseinrichtung beweglich und/oder unabhängig voneinander ansteuerbar sind. Aufgrund der Verfahrbarkeit der Spannstöcke ist es möglich, potentielle Kollisionen zwischen den Bearbeitungseinrichtungen, insbesondere dem beweglichen Portal und den Spannstöcken zu vermeiden.

In einer Ausgestaltung sind Bearbeitungseinrichtungen jeweils als Portal ausgebildet, und die Vorschubwagen und/oder die Spannstöcke sind derart ausgebildet, dass sie durch die Portale hindurch beweglich sind. Somit können die beweglichen Bearbeitungseinrichtungen, die Vorschubwagen und die Spannstöcke relativ zueinander bewegt werden, ohne dass es zu Kollisionen kommt.

In einer Ausgestaltung umfasst die Werkzeugmaschine eine Messvorrichtung zur Messung eines oder mehrerer vorbestimmter Parameter der Werkstückbearbeitung, wobei die Steuereinrichtung dazu ausgebildet ist, eine Reihenfolge von Bearbeitungsschritten durch die erste und/oder zweite Bearbeitungseinrichtung abhängig von Messergebnissen der Messvorrichtung abzuändern. Diese Ausgestaltung ist insbesondere dann von Vorteil, wenn sich Unterschiede zwischen einer geplanten Dauer eines Bearbeitungsschrittes und einer tatsächlichen Dauer des Bearbeitungsschrittes ergeben. Solche Unterschiede können sich durch Schwankungen in den Materialeigenschaften des Werkstücks oder aufgrund von Abnutzung der Bearbeitungswerkzeuge ergeben. Beispielsweise kann für die Durchführung einer Bohrung eine Zeitdauer von 5 sec vorgesehen sein, während die Messung ergibt, dass die Bohrung erst nach 8 sec abgeschlossen ist. In einem solchen Fall kann es günstig sein, die Reihenfolge der Bearbeitungsschritte anzupassen.

In einer Ausgestaltung umfasst die zweite Bearbeitungseinrichtung eine Säge, und/oder das mindestens eine rotierbare Werkzeug umfasst mindestens einen Bohrer. Die Erfindung ist jedoch nicht auf die Durchführung von Bohrungen oder Sägen beschränkt. Anstatt von oder zusätzlich zu Bohrungen können auch andere Bearbeitungen durchgeführt werden, z.B. Fräsen, Senken, etc. An Stelle von oder zusätzlich zum Sägen können auch andere Trennbearbeitungen durchgeführt werden, z.B. ein thermisches Trennen oder Ausklinken.

Gemäß der vorliegenden Erfindung ist weiterhin ein Verfahren zur Steuerung der Werkzeugmaschine geschaffen, das Verfahren umfassend: Empfangen, durch die Steuereinrichtung, von Parametern bezüglich zu bearbeitender Werkstücke und vorgesehener Bearbeitungen an den Werkstücken; Bestimmen, durch die Steuereinrichtung, auf Grundlage der empfangenen Parameter, einer Reihenfolge von Bearbeitungsschritten, wobei die Bearbeitungsschritte durch die erste und/oder gegebenenfalls weiteren Bearbeitungseinrichtungen und die zweiten Bearbeitungseinrichtung zumindest zweitweise gleichzeitig durchgeführt werden; und Erzeugen, durch die Steuereinrichtung, von Steuersignalen für die Werkstückzufuhreinrichtung, die ersten und/oder zweiten Vorschubeinrichtungen, und/oder die Bearbeitungseinrichtungen, zur Durchführung der Bearbeitungsschritte in der bestimmten Reihenfolge.

Ein wesentlicher Vorteil dieses Verfahren besteht darin, dass die Reihenfolge der Bearbeitungsschritte unterschiedlich festgelegt werden kann.

Das Verfahren kann insbesondere durch eine Software zur Steuerung der Werkzeugmaschine implementiert sein. Eine derartige Software ermöglicht es, dass z.B. in ein Bedienterminal der Werkzeugmaschine eingegeben wird, wie das fertige Werkstück auszusehen hat. Die Software bestimmt dann, welche Arbeitsschritte in welcher Reihenfolge durchgeführt werden. Anschließend stellt die Software sogenannte CNC-Daten bereit. Die Software ist dabei so ausgebildet, dass bei der Bestimmung der Reihenfolge der Bearbeitungsschritte Kollisionen (z.B. zwischen Arbeitsspindeln und Spannstöcken) verhindert werden und gleichzeitig eine möglichst schnelle, d.h. möglichst parallele Bearbeitung stattfinden kann bzw. dass die Fahrwege der Bearbeitungseinrichtungen, insbesondere des Portals und der rotierbaren Werkzeuge, möglichst gering sind.

In einer Ausgestaltung umfasst das Verfahren ein Anpassen, durch die Steuereinrichtung, der Reihenfolge der Bearbeitungsschritte in Reaktion auf eine Änderung der Parameter oder den Empfang neuer Parameter während Werkstückbearbeitung; und Erzeugen, durch die Steuereinrichtung, von neuen Steuersignalen gemäß der angepassten Reihenfolge. Somit kann im Gegensatz zum Stand der Technik nicht nur eine vorbestimmte Sequenz von Arbeitsschritten durchgeführt werden, sondern es kann auch auf (z.B. gemessene) Veränderungen während der Abarbeitung der einzelnen (u.U. zahlreichen) Bearbeitungsschritte reagiert werden.

Die Parameter können Informationen über Dimensionen der Werkstücke, Art der vorgesehenen Bearbeitungen, und Position der vorgesehenen Bearbeitungen enthalten, wobei das Verfahren die folgenden weiteren Schritte umfassen kann: Bestimmen, durch die Steuereinrichtung, abhängig von den Dimensionen der Werkstücke, der Art der vorgesehenen Bearbeitungen und der Position der vorgesehenen Bearbeitungen, einer ersten Reihenfolge, in der die Werkstücke bearbeitet werden, und einer zweiten Reihenfolge von durch die ersten und zweiten Bearbeitungseinrichtungen durchzuführenden Bearbeitungsschritten; und Erzeugen, durch die Steuereinrichtung, von Steuersignalen für die Werkstückzufuhreinrichtung, die ersten und/oder zweiten Vorschubeinrichtungen, und/oder die ersten und/oder zweiten Bearbeitungseinrichtungen, zur Durchführung der Werkstückbearbeitung gemäß den ersten und zweiten Reihenfolgen.

Die Reihenfolge der Bearbeitungsschritte ergibt sich somit aus den Informationen zu dem zu bearbeitenden Werkstück, insbesondere dessen Dimensionen, sowie dem herzustellenden Produkt. Bei Implementierung des Verfahrens durch eine Software kann diese auf eine Datenbank zugreifen, in der bestimmte Informationen hinterlegt sind, z.B. die Dauer zur Herstellung einer Bohrung durch ein Werkstück einer bestimmten Größe und aus einem bestimmten Material.

Insbesondere steuert die Steuereinrichtung die erste Bearbeitungseinrichtung derart, dass während der Bearbeitung eines der Werkstücke durch die zweite Bearbeitungseinrichtung wahlweise eine gleichzeitige Bearbeitung desselben oder eines anderen Werkstückes erfolgt. Damit kann eine möglichst hohe und ständige Auslastung der einzelnen Werkzeuge der Werkzeugmaschine erreicht werden.

Die Steuereinrichtung kann die Bearbeitungseinrichtungen dabei derart steuern, dass die erste und/oder gegebenenfalls die weiteren Bearbeitungseinrichtungen während der Werkstückbearbeitung durch die zweite Bearbeitungseinrichtung relativ zu der zweiten Bearbeitungseinrichtung und relativ zueinander bewegt wird. Somit können beispielsweise an verschiedenen, u.U. relativ weit auseinander liegenden Stellen Bohrungen durchgeführt werden, während parallel dazu an einer anderen Stelle ein Sägevorgang durchgeführt wird.

In einer Ausgestaltung umfasst das Verfahren zunächst eine Steuerung, durch die Steuereinrichtung, der ersten Bearbeitungseinrichtung und/oder gegebenenfalls der weiteren Bearbeitungseinrichtungen zum Durchführen von allen Bearbeitungen, die innerhalb eines vorbestimmten Abstandes von einer vorgesehenen Position für eine Bearbeitung durch die zweite Bearbeitungseinrichtung liegen; danach eine Steuerung, durch die Steuereinrichtung, der Vorschubeinrichtung zum Verschieben des Werkstücks, so dass die zweite Bearbeitungseinrichtung an der vorgesehenen Position angeordnet ist; und danach eine Steuerung, durch die Steuereinrichtung, der zweiten Bearbeitungseinrichtung zur Bearbeitung des Werkstücks an der vorgesehen Position und der ersten Bearbeitungseinrichtung zur gleichzeitigen Bearbeitung des Werkstücks an mindestens einer Position, die außerhalb des vorbestimmten Abstandes von der vorgesehenen Position liegt. Somit können z.B. zuerst Bohrungen durchgeführt werden, die nahe an einer vorgesehenen Sägeposition liegen, wonach weiter entfernte Bohrungen dann parallel zu dem anschließenden Sägevorgang durchgeführt werden. Auf diese Weise können Kollisionen vermieden und dennoch eine Parallelisierung der Werkstückbearbeitungen erreicht werden.

In einer Ausgestaltung umfasst das Verfahren, im Anschluss an die Bestimmung der ersten und zweiten Reihenfolgen, das Bestimmen, durch die Steuereinrichtung, einer dritten Reihenfolge von durch die rotierbaren Werkzeuge der ersten Bearbeitungseinrichtung durchzuführenden Bearbeitungsschritten, wobei diese Bearbeitungsschritte eine Bewegung der rotierbaren Werkzeuge innerhalb des Portals umfassen können, aber keine Bewegung der ersten Bearbeitungseinrichtung relativ zu der zweiten Bearbeitungseinrichtung erfordern. Mit anderen Worten wird zunächst bestimmt, in welcher Reihenfolge mehrere Werkstücke bearbeitet werden sollen, und in welcher Reihenfolge die ersten und zweiten Bearbeitungseinrichtungen eingesetzt werden, bevor bestimmt wird, in welcher Reihenfolge die Bearbeitungsschritte durch die rotierbaren Werkzeuge des Portals durchgeführt werden. Eine solche hierarchische Bestimmung der Reihenfolgen hat sich als effizient herausgestellt.

In einer Ausgestaltung umfasst das Verfahren das Bestimmen, durch die Steuereinrichtung, mittels von einer Messeinrichtung gelieferten Messdaten, ob ein zur Bearbeitung in die Werkzeugmaschine zugeführtes Werkstück dem nächsten gemäß der bestimmten ersten Reihenfolge zu bearbeitenden Werkstück entspricht; und falls das zugeführte Werkstück nicht dem nächsten zu bearbeitenden Werkstück entspricht, das Bestimmen, durch die Steuereinrichtung, ob das zugeführte Werkstück einem später zu bearbeitenden Werkstück entspricht und, falls das zugeführte Werkstück einem später zu bearbeitenden Werkstück entspricht, das Anpassen, durch die Steuereinrichtung, zumindest der ersten Reihenfolge.

Somit kann flexibel darauf reagiert werden, falls bei der Bearbeitung einer Vielzahl von Werkstücken eine Veränderung in der Reihenfolge der Zufuhr der einzelnen Werkstücke vorkommt. Im Ergebnis kann dadurch eine Verlängerung der Gesamtbearbeitungszeit verhindert werden.

In einer Ausgestaltung umfasst das Verfahren das Bestimmen, durch die Steuereinrichtung, anhand der Position eines gerade bearbeiteten Werkstücks, ob der Werkzeugmaschine das nächste Werkstück zugeführt werden kann, und gegebenenfalls das Steuern, durch die Steuereinrichtung, der Werkstückzufuhreinrichtung, so dass der Werkzeugmaschine das nächste vorgesehene Werkstück zugeführt wird. Diese Ausgestaltung ermöglicht eine weitere Verkürzung der Bearbeitungszeit.

In einer Ausgestaltung umfasst das Verfahren das Bestimmen, durch die Steuereinrichtung, während der Bearbeitung eines Werkstücks durch die zweite Bearbeitungseinrichtung, ob mindestens ein weiterer bisher nicht zu diesem Zeitpunkt vorgesehener Bearbeitungsschritt durch die erste und/oder gegebenenfalls die weiteren Bearbeitungseinrichtungen zumindest teilweise gleichzeitig zu der Bearbeitung des Werkstücks durch die zweite Bearbeitungseinrichtung durchgeführt werden kann, und gegebenenfalls eine Steuerung, durch die Steuereinrichtung, der ersten und/oder gegebenenfalls weiteren Bearbeitungseinrichtungen zur zumindest teilweise gleichzeitigen Durchführung des weiteren Bearbeitungsschrittes. Diese Ausgestaltung ermöglicht eine Anpassung der Bearbeitung an festgestellte Veränderungen, z.B. aufgrund einer vorzeitigen Beendigung eines Arbeitsschrittes.

In einer Ausgestaltung umfasst das Verfahren das Messen, durch die Steuereinrichtung, der Dauer für die Durchführung von einem oder mehreren der Bearbeitungsschritte durch die erste und/oder zweite und/oder gegebenenfalls weiteren Bearbeitungseinrichtungen; das Vergleichen, durch die Steuereinrichtung, der gemessenen Werte mit gespeicherten, der Bestimmung der ersten, zweiten und/oder dritten Reihenfolgen zu Grunde liegenden Werten; und das Anpassen, durch die Steuereinrichtung, der ersten und/oder zweiten und/oder dritten Reihenfolge, abhängig von dem Ergebnis des Vergleichs.

Somit werden während der Durchführung der einzelnen Arbeitsschritte Messungen durchgeführt und berücksichtigt. Diese Messungen werden bei der Durchführung der Arbeitsschritte berücksichtigt, d.h. es kann abhängig von den Messungen zu einer Änderung der Abfolge der Arbeitsschritte kommen. Bspw. kann eine solche Messung ergeben, dass die Durchführung einer Bohrung länger als vorgesehen dauert, d.h. länger als anhand von Informationen aus einer Datenbank berechnet. In einem solchen Fall kann es dazu kommen, dass beispielsweise die betroffenen Bohrungen später durchgeführt werden, weil diese aufgrund der längeren Zeitdauer nicht parallel zu einem ebenfalls durchzuführenden Sägeschritt durchgeführt werden können. Stattdessen können andere (kürzere) Arbeitsschritte parallel zu dem Sägeschritt durchgeführt werden.

Erfindungsgemäß ist zudem eine Steuereinrichtung geschaffen, die eingerichtet oder programmiert ist zur Durchführung des oben beschriebenen Verfahrens.

Außerdem ist erfindungsgemäß ein Computerprogramm geschaffen, umfassend maschinenlesbare Befehle, die bei Ausführung durch eine computerimplementierte Steuereinrichtung die Ausführung des oben beschriebenen Verfahrens veranlassen.

### Kurzbeschreibung der Zeichnungen

Nachfolgend werden beispielhafte Ausgestaltungen der Erfindung anhand der beigefügten Zeichnungen beschrieben. Es zeigen:
- Figur 1: zeigt eine perspektivische Darstellung einer Werkzeugmaschine gemäß einer beispielhaften Ausführungsform der Erfindung,
- Figur 2: zeigt eine Draufsicht auf die Werkzeugmaschine aus Figur 1,
- Figur 3: zeigt eine Ansicht Werkzeugmaschine aus Figur 1 längs einer Führungseinheit,
- Figur 4: zeigt ein schematisches Ablaufdiagramm einer beispielhaften Implementierung eines erfindungsgemäßen Verfahrens,
- Figur 5: zeigt schematisch eine Werkzeugmaschine mit einem Zufuhrsystem während der Materialzufuhr gemäß einer Ausgestaltung der Erfindung,
- Figur 6: zeigt schematisch die Werkzeugmaschine aus Figur 5 in einem ersten Arbeitstakt,
- Figur 7: zeigt schematisch die Werkzeugmaschine aus Figur 5 in einem zweiten Arbeitstakt, und
- Figur 8: zeigt schematisch die Werkzeugmaschine aus Figur 5 in einem dritten Arbeitstakt.

### Beschreibung der Erfindung anhand von beispielhaften Ausführungsformen

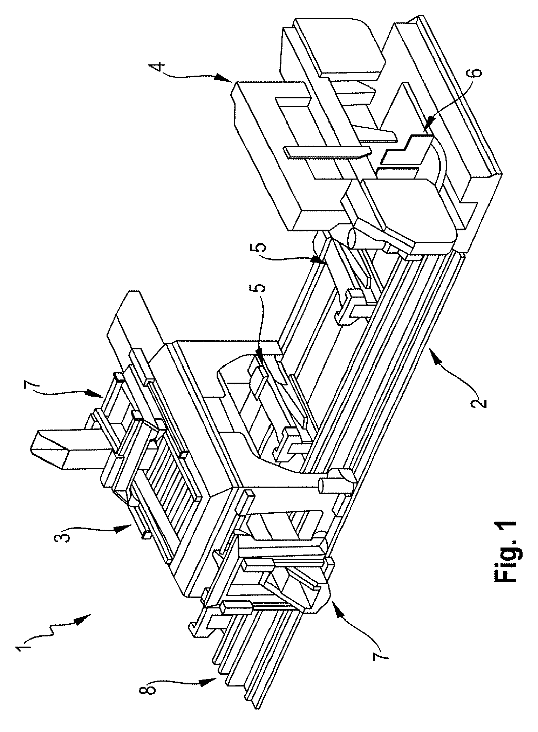

Figur 1 zeigt eine Werkzeugmaschine 1 gemäß einer beispielhaften Ausführungsform der Erfindung mit einer Führungseinrichtung 2, einer (ersten) Bearbeitungseinrichtung (3), einer Trenneinrichtung 4 (zweite Bearbeitungseinrichtung) und zwei entlang der Führungseinrichtung 2 verschieblichen Spannstöcken 5.

Die Trenneinrichtung 4 ist an einem Ende der Führungseinrichtung 2 so angeordnet, dass die Trenneinrichtung 4 die Führungseinrichtung 2 begrenzt. Die Trenneinrichtung 4 wird dabei durch ein feststehendes Portal gebildet, welches eine Säge umfasst, insbesondere eine Bandsäge, oder eine thermische Trenneinrichtung.

Die Bearbeitungseinrichtung 3 und die Spannstöcke 5 sind entlang der Führungseinrichtung 2 sowohl relativ zueinander als auch relativ zur feststehenden Trenneinrichtung 4 verschieblich.

Die Führungseinrichtung 2 ist dazu ausgebildet, die Spannstöcke 5 und die Bearbeitungseinrichtung 3 zu führen und aufzunehmen. Dazu sind entlang der Führungseinrichtung 2 entsprechende Führungsschienen 8 vorgesehen.

Die Bearbeitungseinrichtung 3 ist, gleich der Trenneinrichtung, als Portal ausgebildet. Die Spannstöcke 5 können innerhalb des Portals, d.h. durch das Portal hindurch verschoben werden und ermöglichen das feste Einspannen sowie das Transportieren der Werkstücke.

Die Bearbeitungseinrichtung 3 umfasst gemäß der dargestellten Ausführungsform drei rotierbare Werkzeuge. Es können aber auch beliebige andere Werkzeuge wie zum Beispiel Stanzen, Stempel oder Signierwerkzeuge Verwendung finden. Die Werkzeuge sind dabei so angeordnet, dass sie innerhalb der Bearbeitungseinrichtung 3 beweglich sind, was beispielsweise dazu genutzt werden kann, Arbeitsschritte zusammenzufassen, zum Beispiel um Bohrnester zu bilden.

Die rotierbaren Werkzeuge können dabei sowohl in Richtung der Führungsschienen 8 der Führungseinrichtung 2 als auch quer zur Führungseinrichtung 2 und entlang der Hochachse der Bearbeitungseinrichtung 3 beweglich sein. Die rotierbaren Werkzeuge können sich somit innerhalb der Abmessungen der Bearbeitungseinrichtung 3 unabhängig in alle drei Raumrichtungen bewegen wodurch ein Verschieben der Bearbeitungseinrichtung 3 minimiert werden kann, indem nahe beieinander liegende Bearbeitungen zu Gruppen zusammengefasst werden. Liegen die Bearbeitungsschritte innerhalb des Bereiches des Portals der Bearbeitungseinrichtung, in dem die rotierbaren Werkzeuge beweglich sind, errechnet eine Steuereinrichtung (nicht dargestellt) eine Position der Bearbeitungseinrichtung 3 zur Bildung von Gruppen dergestalt, dass der Fahrweg der Bearbeitungseinrichtung 3 minimiert wird.

Somit ist es beispielsweise möglich, mehrere Bohrstellen, die innerhalb des Arbeitsbereiches der rotierbaren Werkzeuge und entlang der Verschiebungsrichtung der Bearbeitungseinrichtung 3 liegen, in einem Arbeitsschritt zu bearbeiten, ohne dass die Bearbeitungseinrichtung 3 bewegt werden muss. Auf diese Weise können der Fahrweg und somit die Bearbeitungszeit minimiert werden.

In der dargestellten Ausführungsform sind die Aufnahmeeinrichtungen für die rotierbaren Werkzeuge 7 der Bearbeitungseinrichtung 3 innerhalb des Portals beweglich. Das Portal kann hierzu weitere Führungsschienen für die Aufnahmeeinrichtungen der rotierbaren Werkzeuge aufweisen.

Die Trenneinrichtung 4 kann mit einer zusätzlichen Spann- und/oder Gehrungseinrichtung 6 zum Gehrungssägen von Werkstücken versehen sein. Die Trenneinrichtung 4 ist in der dargestellten Ausführungsform durch eine Säge, beispielsweise eine Bandsäge, gebildet. In anderen Ausführungsformen kann die Trenneinrichtung 4 durch eine thermische Trenneinrichtung, wie zum Beispiel einen Schneidbrenner oder einen Laser ausgeführt sein.

Die Dimensionen der Trenneinrichtung, insbesondere die Portalweite können den Abmaßen der zu bearbeitenden Werkstücke angepasst sein.

In einer nicht weiter dargestellten Ausgestaltung der Erfindung ist hinter der Trenneinrichtung 4 eine Abführeinrichtung für den Trennverschnitt vorgesehen. In einer weiteren Ausgestaltung der Erfindung kann die Abführeinrichtung mit einer Transporteinrichtung zum Abtransport des Reststücke und /oder der Fertigteile kombiniert sein.

Die Steuereinrichtung ist dazu ausgebildet, die Trenneinrichtung 4, die Bearbeitungseinrichtung 3, deren rotierbare Werkzeuge, die Spannstöcke 5 und mehrere Mess- oder Vorschubwagen 9,10 prozessoptimal und unabhängig voneinander zu steuern. Die Steuerungseinrichtung ist dabei insbesondere dazu ausgebildet, die Fahrwege der beweglichen Teile entlang der Führungseinrichtung 2 zu minimieren.

In einer ebenfalls nicht weiter dargestellten Ausgestaltungsform der Erfindung ist in dem der Trenneinrichtung 4 gegenüberliegenden Bereich der Maschine, also im Zuführbereich der Werkstücke, ein Quertransportsystem vorgesehen. Über die Quertransporteinrichtung wird ein Werkstück in den Vorschubbereich, d.h. den freien Bereich der Führungseinrichtung 2 bzw. einen Bereich der Führungseinrichtung 2 oder einen Bereich vor der Führungseinrichtung 2 gebracht. Dabei kommt es bereits auf den beweglichen Spannstöcken 5 zu liegen und wird vorgespannt und stirnseitig von einem Messwagen 9,10 erfasst. Der Messwagen 9,10 bestimmt einen Materialnullpunkt und führt das Werkstück der Trenneinrichtung 4 zu.

Insbesondere sind mehrere Mess- oder Vorschubwagen 9,10 vorgesehen, um mehrere Werkstücke parallel zu vermessen und/oder zuzuführen. Die Steuereinrichtung berechnet, z.B. gemäß den Vorgaben des Bedieners, wie das Werkstück zu bearbeiten ist und welche Arbeitsschritte in welcher Reihenfolge abgearbeitet werden.

Um die uneingeschränkte Beweglichkeit der Bearbeitungseinrichtung 3 zu gewährleisten, können Quertransportbalken des Quertransportsystems hochklappbar sein.

Ist das Werkstück der Trenneinrichtung 4 zugeführt, wird es von der Gehrungseinrichtung 6 und den beweglichen Spannstöcken 5 eingespannt. Die Position der Spannstöcke 5 wird dabei von der Steuerung so festgelegt, dass eine Kollision mit der Bearbeitungseinrichtung 3 vermieden wird. Dabei werden Positionsänderungen der Bearbeitungseinrichtung 3 während der Bearbeitung des Werkstückes von vorneherein berücksichtigt. Mit anderen Worten werden die Spannstöcke 5 durch die Steuereinrichtung so positioniert, dass sie der Bearbeitungseinrichtung 3 während der anschließenden Bearbeitung nicht im Weg stehen.

Während des Trennvorgangs kann die Bearbeitungseinrichtung 3 parallel mehrere oder sogar alle durch sie auszuführenden Arbeitsschritte ausführen. Die Arbeitsschritte der Bearbeitungseinrichtung 3 sind dabei sowohl räumlich als auch zeitlich vom Trennprozess entkoppelt. Die Steuereinrichtung berechnet die optimale Abfolge der Arbeitsschritte als Minimierungsproblem der Bearbeitungszeit abhängig vom Fahrweg der Bearbeitungseinrichtung 3. Dabei können durch die Bearbeitungseinrichtung 3 durchzuführende Bearbeitungsschritte aufgrund der Beweglichkeit der Werkzeuge innerhalb der Bearbeitungseinrichtung 3 in Untergruppen zusammengefasst werden (sog. Bohrnester, s.o.).

Ist die vollständige Bearbeitung eines Werkstückes durch die Bearbeitungseinrichtung 3 erfolgt, der Trennvorgang aber noch nicht abgeschlossen und das Werkstück daher noch nicht bereit zum Abtransport, kann ein weiteres Werkstück zugeführt werden, an dem dann bereits erste (nicht trennende) Arbeitsschritte durchgeführt werden können. Nach Abschluss des Trennvorganges wird das Werkstück entweder entlang der Führungseinrichtung 2 durch die Trenneinrichtung 4 hindurch abgeführt oder bis zur nächsten Trennstelle weitergeführt.

Das Abführen/Weiterführen wird dabei durch die beweglichen Spannstöcke 5 und die Messwagen 9,10 durchgeführt. Werden zwei Werkstücke parallel bearbeitet, so werden die Spannstöcke 5 während eines Bearbeitungsvorganges nötigenfalls so gesteuert, dass ein Umgreifen bewirkt wird, um Kollisionen mit der Bearbeitungseinrichtung 3 zu verhindern.

Nach dem Abführen eines Werkstückes laufen die Messwagen 9,10 und die Spannstöcke 5 in eine Ausgangsposition im Bereich der Materialzuführung zurück, um ein oder mehrere neue Werkstücke aufzunehmen.

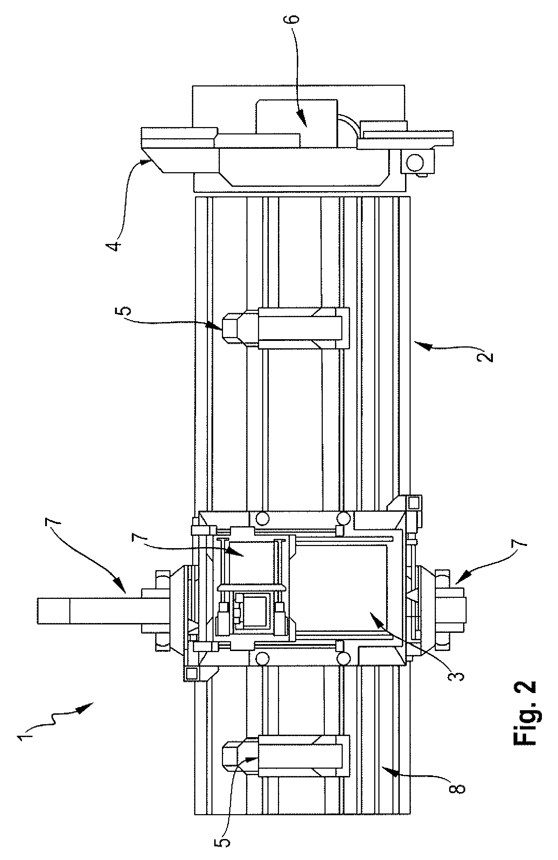

Figur 2 zeigt eine beispielhafte Ausgestaltungsform der Erfindung in einer Draufsicht. Die Trenneinrichtung 4 bildet in dieser Ansicht eine rechte Begrenzung der Führungseinrichtung.

In dieser Darstellungsform ist erkennbar, dass die Führungseinrichtung 2 mehrere Führungsschienen 8 zur Aufnahme der Spannstöcke 5, der Bearbeitungseinrichtung 3 und weiterer, entlang der Führungseinrichtung 2 beweglicher Komponenten, zum Beispiel Vorschub- oder Messwagen 9,10 umfasst.

Die Spannstöcke 5 haben eine geringere Breite bzw. einen kleineren Querschnitt als die Öffnung des Portals, so dass die Spannstöcke durch die Portalöffnung hindurch verschoben werden können. Somit können die Spannstöcke 5 unabhängig von der Position bzw. entkoppelt von der Bearbeitungseinrichtung 3 verschoben werden.

In weiteren Ausführungsformen können weitere Führungsschienen zur Aufnahme von zum Beispiel Messwagen 9 und/oder weiteren Spannstöcken vorgesehen sein. Es können auch mehrere Spannstöcke 5 bzw. Messwagen 9,10 auf den Führungsschienen 8 parallel zueinander verschieblich angeordnet sein. Dies ermöglicht eine simultane Bearbeitung mehrerer Werkstücke. Die Spannstöcke 5 können dabei so ausgebildet sein, dass ein Umgreifen am Werkstück während der Bearbeitung möglich ist. Hierdurch können Kollisionen vermieden werden.

In der Ausführungsform der Erfindung gemäß Figur 2 sind die Aufnahmeeinrichtungen für die rotierbaren Werkzeuge der Bearbeitungseinrichtung 3 als Laufkatzen, welche mittels Führungsschienen am Portal der Bearbeitungseinrichtung 3 angebracht sind, ausgeführt.

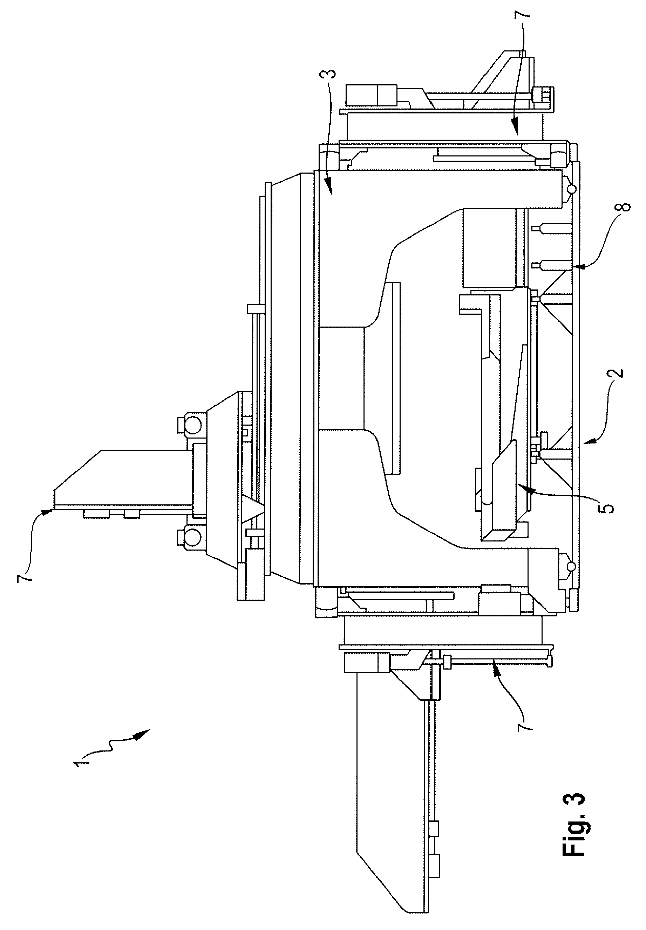

Figur 3 zeigt eine Seitenansicht der Werkzeugmaschine 1. In Figur 3 ist erkennbar, dass die Spannstöcke 5 innerhalb der Portalweite der Bearbeitungseinrichtung 3, d.h. durch die Portalöffnung hindurch verschieblich sind. Die Spannstöcke 5 können dabei so ausgebildet sein, dass Werkstücke innerhalb von durch die Portalweite der Bearbeitungseinrichtung 3 definierten Grenzen quer zu der Längserstreckung der Führungsschienen verschoben werden können. Dies hat den Vorteil, dass mehrere Werkstücke parallel eingespannt und bearbeitet werden können. Somit können der Trennvorgang und der Bearbeitungsvorgang nicht nur parallel/simultan an einem Werkstück stattfinden, sondern auch parallel an unterschiedlichen Werkstücken innerhalb derselben Maschine. Es ist somit eine zusätzliche Entkopplung von Trenn- und Bearbeitungsvorgängen möglich. Dies ermöglicht eine weitere Zeitersparnis und führt zur besseren Auslastung der Maschine.

Des Weiteren zeigt die Figur 3 die Aufnahmeeinrichtungen 7 für die rotierbaren Werkzeuge der Bearbeitungseinrichtung 3. Die Aufnahmeeinrichtungen 7 sind an den Außenseiten des Portals angebracht und in Führungsschienen entlang den Außenseiten beweglich. Auf diese Weise ist es möglich, mehrere Bearbeitungsschritte, zum Beispiel Bohren, Fräsen oder Schleifen, ohne weiteres Bewegen der Bearbeitungseinrichtung 3 auszuführen, wenn sich die Bearbeitungsstellen innerhalb eines vorbestimmten Bereichs, innerhalb dessen die rotierbaren Werkzeuge in den Führungsschienen am Portal beweglich sind, befinden. Da auch die Aufnahmeeinrichtungen für die rotierbaren Werkzeuge an sich unabhängig voneinander bewegt werden können, ist eine weitere Parallelisierung von Arbeitsschritten möglich.

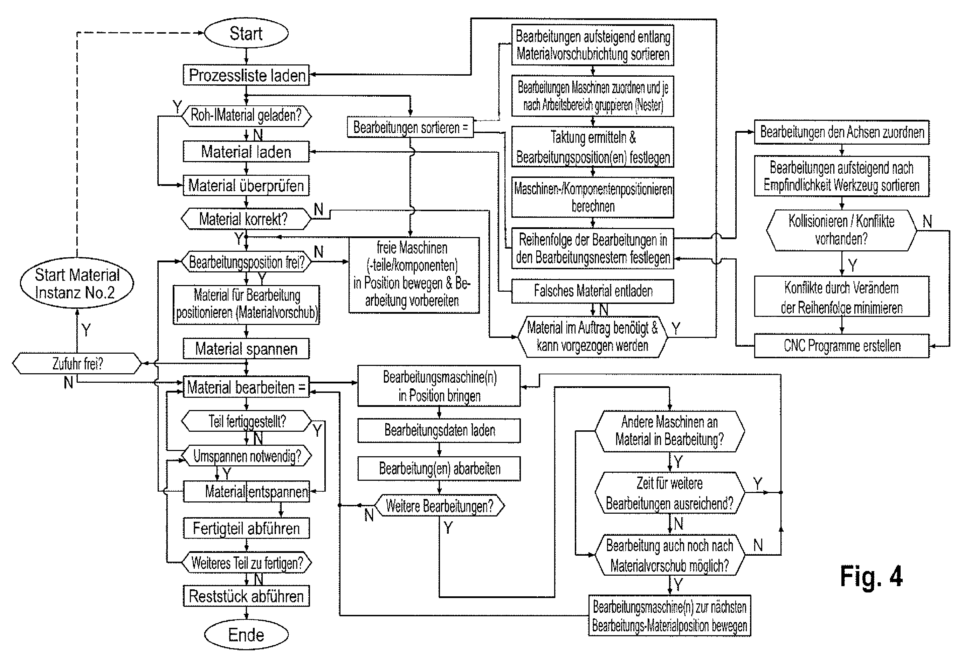

Die Figur 4 zeigt ein Ablaufdiagramm mit Schritten, die durch ein Verfahren gemäß einer Ausgestaltung der Erfindung durchgeführt werden.

Gemäß dem in Figur 4 dargestellten Ablaufdiagramm, lädt eine zur Implementierung des Verfahrens vorgesehene Steuerungssoftware der Steuerungseinrichtung nach dem Start zunächst eine Prozessliste. Die Prozessliste bildet Merkmale des herzustellenden Produkts und die dazu notwendigen Arbeitsschritte ab. Merkmale können aus der digitalen Prozesskette übernommen oder vom Bediener eingegeben werden. Die Eingaben des Bedieners bilden eine Eingangsgröße der Steuerungssoftware. Die Ableitung der notwendigen Bearbeitungsschritte erfolgt durch die Steuerungssoftware.

Nach dem Laden der Prozessliste werden die zur Herstellung des Produkts mit den Merkmalen aus der Prozessliste notwendigen Bearbeitungen bestimmt und sortiert. Das Sortieren der Bearbeitungsreihenfolge umfasst das Sortieren der Bearbeitungen aufsteigend entlang der Materialvorschubrichtung, die Zuordnung der Bearbeitungen zu den Maschinen je nach Arbeitsbereich, und deren Gruppierung (z.B. Bilden von Nestern). Weiterhin umfasst das Sortieren der Bearbeitungen das Ermitteln der Taktung und das Festlegen der Bearbeitungspositionen. Danach werden die Maschinen/ Komponentenpositionen berechnet und die Reihenfolge der Bearbeitungen in den Bearbeitungsnestern festgelegt.

Dabei umfasst das Festlegen der Reihenfolge der Bearbeitungen weiterhin die Zuordnung der Bearbeitungen zu den Achsen der Maschinen, eine weitere Sortierung der Bearbeitungen absteigend nach der Empfindlichkeit des Werkzeuges, die Ermittlung von potentiellen Kollisionen und Konflikten und die Anpassung der Reihenfolge zur Vermeidung ebensolcher, sowie das Erstellen von CNC-Programmen.

Ein Merkmal der Steuerungssoftware besteht darin, dass die Reihenfolge der Bearbeitungsschritte unterschiedlich festgelegt werden kann. Die Reihenfolge der Bearbeitungsschritte ergibt sich dabei aus Informationen zu dem zu bearbeitenden Werkstück (Prozessliste, s.o.), insbesondere dessen Dimensionen, sowie dem herzustellenden Produkt. Dabei greift die Software auf eine Datenbank zu, in der bestimmte Informationen hinterlegt sind, z.B. die Dauer zur Herstellung einer Bohrung durch ein Werkstück einer bestimmten Größe und aus einem bestimmten Material. Somit ermöglicht die Steuerungssoftware die Durchführung unterschiedlicher, gegebenenfalls auch variabler Sequenzen von Arbeitsschritten.

Ein weiteres Merkmal der Steuerungssoftware besteht darin, dass während der Durchführung der einzelnen Arbeitsschritte Messungen durchgeführt und berücksichtigt werden. Diese Messungen werden bei der Durchführung der Arbeitsschritte berücksichtigt, d.h. es kann abhängig von den Messungen zu einer Änderung der Abfolge der Arbeitsschritte kommen. Beispielsweise kann eine solche Messung ergeben, dass die Durchführung einer Bohrung länger als erwartet dauert, d.h. länger als anhand der Informationen aus der Datenbank berechnet. In einem solchen Fall kann es dazu kommen, dass beispielsweise die entsprechenden Bohrungen später durchgeführt werden, weil diese aufgrund der längeren Zeitdauer nicht parallel zu einem ebenfalls durchzuführenden Sägeschnitt durchgeführt werden können. Stattdessen können andere Arbeitsschritte parallel zu dem Sägeschnitt durchgeführt werden.

Nach dem Sortieren der Bearbeitungen wird das Rohmaterial geladen. Ist dies bereits erfolgt, wird das Rohmaterial überprüft und gegebenenfalls nicht vorgesehenes Material entladen. Ist vorgesehenes Material geladen, überprüft die Steuereinrichtung ob die errechneten Bearbeitungspositionen frei sind. Gemäß der sortierten Bearbeitungsreihenfolge werden freie Maschinen/Komponenten bereits Positioniert und zur Bearbeitung vorbereitet.

Anschließend positioniert und spannt die Steuerung das geladene Material für die Bearbeitung. Während nun die Bearbeitung beginnt, überprüft die Steuereinrichtung bereits, ob neues, später benötigtes Material zugeführt werden kann. Ist die Zufuhr frei, wird eine zweite Steuerungsinstanz gestartet, durch die eine Bearbeitung des neu zugeführten Werkstückes parallel zu der Bearbeitung des vorherigen Werkstückes ermöglicht wird. Ist die Zufuhr nicht frei, wird das geladene Material zuerst bearbeitet, ohne neues Material nachzuführen.

Das Bearbeiten des Materials umfasst das Positionieren der Bearbeitungseinrichtungen, das Laden der Bearbeitungsdaten und das Abarbeiten der Bearbeitungen. Sind alle Bearbeitungen gemäß der Prozessliste ausgeführt, prüft die Steuereinrichtung, ob weitere Abarbeitungen ausgeführt werden können. Dies wird stets als Zwischenschritt nach jeder Bearbeitung ausgeführt. Sind andere Maschinen am Material noch in Bearbeitung, überprüft die Steuereinrichtung, ob während der Restzeit weitere Bearbeitungsschritte ausgeführt werden können. Ist dies der Fall, erfolgt eine Repositionierung der Bearbeitungseinrichtungen und die weitere Bearbeitung. Ist die verbleibende Bearbeitungszeit nicht ausreichend, prüft die Steuereinrichtung, ob die Bearbeitungen auch noch nach Materialvorschub, also im nächsten Arbeitstakt, ausgeführt werden können. Ist dies der Fall, werden die fehlenden Bearbeitungsschritte dem nächsten Takt zugeordnet. Ist dies nicht der Fall, muss ein Takt gegebenenfalls verlängert werden und die entsprechende Bearbeitungseinrichtung wird in die Bearbeitungsposition gebracht. Ist das Material nach dem Bearbeitungszyklus fertiggestellt, wird es entspannt und abgeführt.

Ist das Material nicht fertiggestellt, prüft die Steuereinrichtung, ob ein Umspannen notwendig ist. Danach wird das Material gegebenenfalls entspannt und neu eingespannt.

Ist kein weiteres Teil zu fertigen wird ein etwaiges Reststück abgeführt und die Steuerungsinstanz wird beendet.

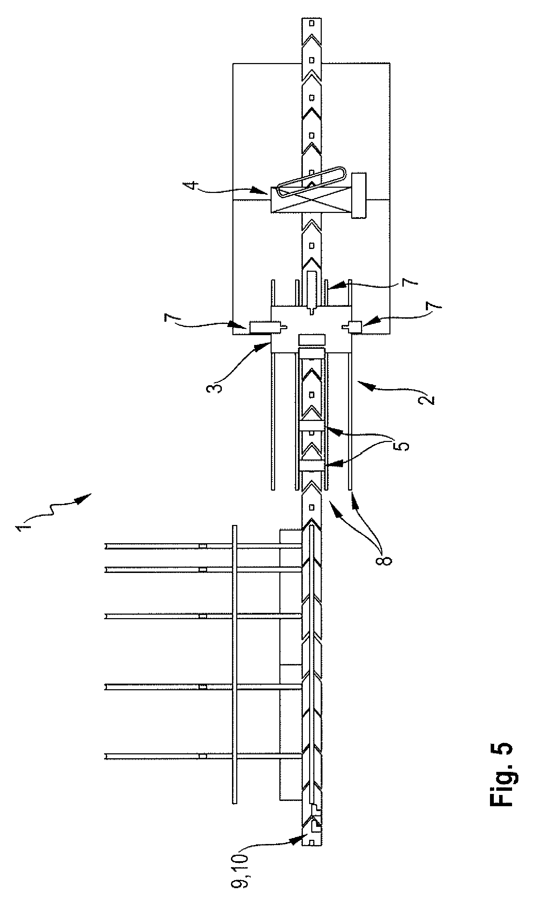

Die Figuren 5-8 zeigen schematisch anhand einer Ausführungsform der erfindungsgemäßen Werkzeugmaschine einen beispielhaften Ablauf des erfindungsgemäßen Verfahrens.

Beispielsweise besteht ein Auftrag aus 3 Profilträgern als Rohmaterialen, aus denen jeweils zwei Teile mit Bohrungen am Anfang und Ende gefertigt werden sollen.

Mit dem Start der automatischen Bearbeitung wird von der Steuereinrichtung die Prozessliste des ersten Materials im Auftrag angefordert. Die Prozessliste enthält, wie oben beschrieben, im Wesentlichen Informationen darüber, welches Ausgangsmaterial verwendet wird und welche Bearbeitungen an dem Material wo ausgeführt werden sollen. Ein Auftrag kann beliebig viele (Roh-) Materialien enthalten.

Generell können aus dem Rohmaterial im Stahlbau durch trennende Verfahren einzelne Teile hergestellt werden, nachdem alle Anarbeitungen an den jeweiligen Teilen ausgeführt wurden z.B. Bohren von Löchern, Fräsungen, Ausklinkungen, Markierungen).

Zunächst bestimmt die Steuereinrichtung aus den Daten das benötigte Material und fordert dieses bei einem Materialzufuhrsystem an (sofern noch nicht geladen) und wartet anschließend auf den Abschluss der Zuladung, wie in Figur 5 dargestellt. Parallel dazu werden von der Steuereinrichtung die in der Prozessliste enthaltenen Bearbeitungen sortiert, zunächst entsprechend der Materialvorschubrichtung. Beispielsweise kann die folgende Abfolge von Bearbeitungsschritten bestimmt werden: Sägeschnitt, Bohrungen, Bohrungen, Sägeschnitt, Bohrungen, Bohrungen, Sägeschnitt.

Anschließend werden die Sägeschnitte der Säge 4 und die Bearbeitungen (Bohrungen) einem die Bearbeitungseinrichtung 3 bildendes Bohrzentrum 3 zugeordnet, wobei das Bohrzentrum über 600 mm Arbeitsbereich in Materialvorschubrichtung verfügt, so dass Bohrungen, die nicht weiter als 600 mm voneinander beabstandet sind, durch das Bohrzentrum hergestellt werden können, ohne dass dieses verfahren werden muss. Bohrungen auf die das zutrifft, werden zu Gruppen ("Bohrnester") zusammengefasst.

Die Steuereinrichtung berechnet dann die Bearbeitungspositionen (= Materialpositionen) für das Werkstück mit dem Ziel, die für die Bearbeitung notwendigen Fahrwege des Bohrzentrums zu minimieren und die Auslastung der Säge 4 zu maximieren. Hiervon ausgehend erstellt die Steuereinrichtung eine Taktung, wobei in einem Takt alle Arbeitsschritte zwischen aufeinanderfolgenden Materialvorschüben zusammengefasst sind.

Bei einer Säge/Bohr- Kombination werden insbesondere immer ein Sägeschnitt und alle Bohrungen, die vor darauf folgenden Sägeschnitt ausgeführt werden sollen, dem gleichen Takt zugeordnet. Je weniger Takte und damit Materialbewegungen notwendig sind, desto kürzer ist Zeit, während der aufgrund von Materialbewegung keine Bearbeitung durchgeführt kann.

Basierend auf den Materialpositionen berechnet die Steuereinrichtung anschließend die Positionen der beweglichen Komponenten 3, 5 (z.B. Spannstockpositionen, Portalpositionen). Anschließend werden die Bewegungsabläufe für die einzelnen Komponenten festgelegt. Bohrnester werden separat überprüft. Danach werden die Komponenten bereits in die berechneten Positionen gebracht. Anschließend oder währenddessen wird das zu bearbeitende Material zugeführt. Ist das Material zugeführt, wird das Vorschubsystem aktiviert. Dabei wird das Material vermessen und überprüft, ob die Abmessungen den von der Steuereinrichtung erhaltenen Vorgaben entsprechen. Ist dies nicht der Fall, so prüft die Steuereinrichtung, ob im aktiven Auftrag das detektierte Material enthalten ist und zieht es in der Reihenfolge vor. Ist dies nicht möglich/der Fall, wird das Material entladen und das korrekte Material erneut angefordert.

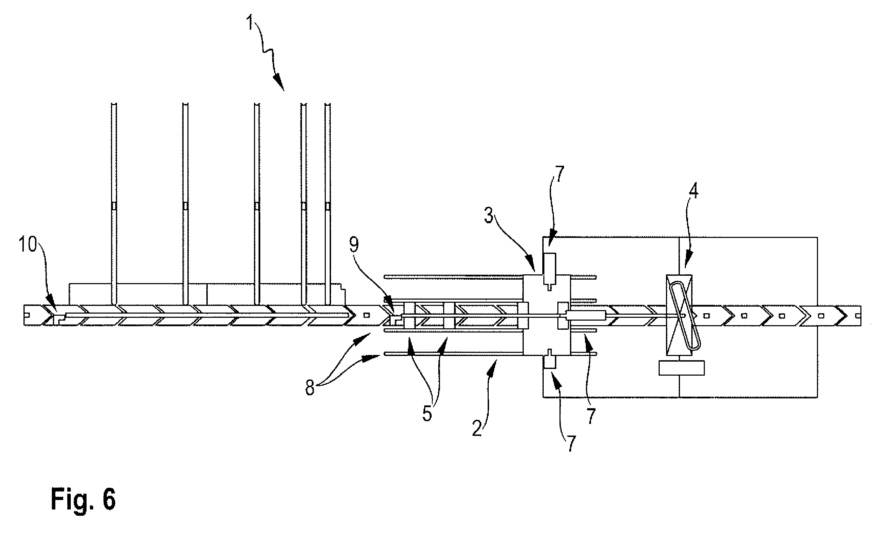

Ist das korrekte Material bereit und erfasst, kann mit der Zufuhr auf die erste Bearbeitungsposition begonnen werden, sobald diese frei ist. Ist dies (noch) nicht der Fall prüft die Steuereinrichtung automatisch ob bereits Komponenten verfügbar sind, die vorpositioniert werden können. Sobald das Material auf der Bearbeitungsposition ist, wird es gespannt und damit an Ort und Stelle fixiert. Anschließend beginnt der erste Bearbeitungstakt, dargestellt in Figur 6. Parallel dazu prüft die Steuereinrichtung, ob die Zufuhr bereits wieder frei ist und das nächste Material (sofern vorhanden/benötigt) bereits geladen werden kann.

Im dargestellten Beispiel werden in einem ersten Takt die Bohrungen, die sich in unmittelbarer Nähe zum ersten vorgesehenen Sägeschnitt befinden, hergestellt. Beispielsweise werden zunächst die seitlichen Bohrungen und dann die Bohrung im Steg hergestellt.

Generell werden während des Bohrvorgangs laufend Messungen durchgeführt, welche die Steuereinrichtung mit in einer Datenbank abgespeicherten Daten vergleicht. Ergeben sich Abweichungen, ist die Steuereinrichtung dazu ausgebildet, die Bearbeitung entsprechend anzupassen.

Nach Abschluss dieser Schritte prüft die Steuereinrichtung, ob die Bearbeitung des Werkstücks abgeschlossen ist.

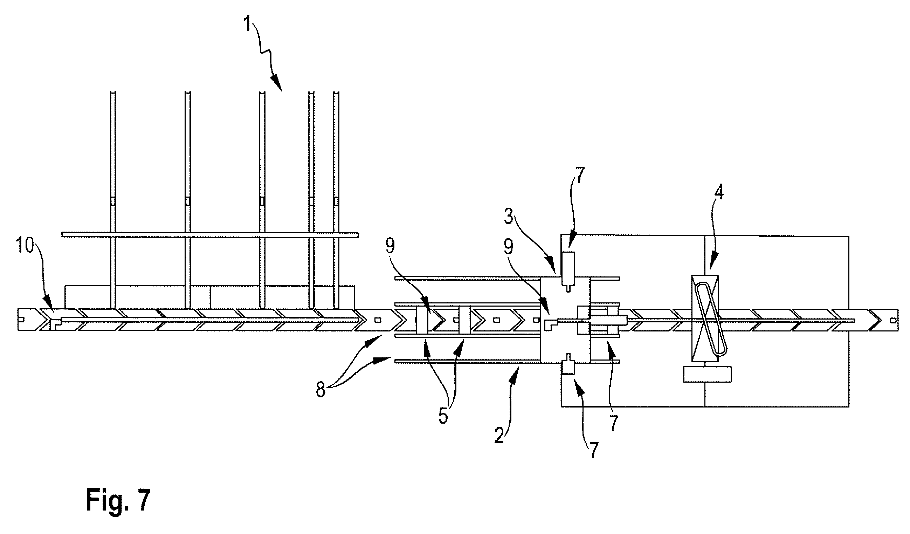

Ist die Bearbeitung nicht abgeschlossen, wird das Werkstück für einen zweiten Takt (dargestellt in Figur 7) in die Säge 4 geschoben und wieder gespannt. Es erfolgt wieder die Prüfung auf freie Zufuhr. Ist diese gegeben, lädt die Maschine 1 das nächste Rohmaterial über das Zufuhrsystem nach. Hierfür wird eine zweite Steuerungsinstanz gestartet, die dem in Figur 4 dargestellten Ablaufdiagramm folgt.

Im zweiten Takt werden beide Bearbeitungseinrichtungen 3,4 eingesetzt, d.h. es ist eine Bohr- und Sägebearbeitung vorgesehen. So sind durch das Bohrzentrum 3 insgesamt 6 Bohrungen herzustellen, je zwei pro rotierbarem Werkzeug (Bohrer) 7, verbunden mit einem Wechsel der Portalposition.

Insbesondere wird das Bohrzentrum 3 gemäß dem in Figur 4 dargestellten Ablaufdiagramm in Arbeitsposition gebracht. Anschließend werden die ersten drei Bohrungen (je eine Bohrung pro Werkzeug) hergestellt. Dazu lädt das Bohrzentrum ein CNC-Programm mit Instruktionen für die Durchführung der Bearbeitung.

Die Werkzeugmaschine 1 ist dazu ausgebildet, nach Durchführung von zwingend in einem Takt vorgesehen Bearbeitungen zu prüfen, ob noch in demselben Takt weitere Bearbeitungen durchzuführen sind. Ist dies der Fall, überprüft die Steuereinrichtung die verbleibende(n) Bearbeitungszeit(en) der anderen Komponente(n), insbesondere der Säge 4. Anschließend bestimmt die Steuereinrichtung, ob es zeitlich und geometrisch möglich ist, weitere Bearbeitungen ausführen. Gegebenenfalls wird dies durch die Steuereinrichtung veranlasst.

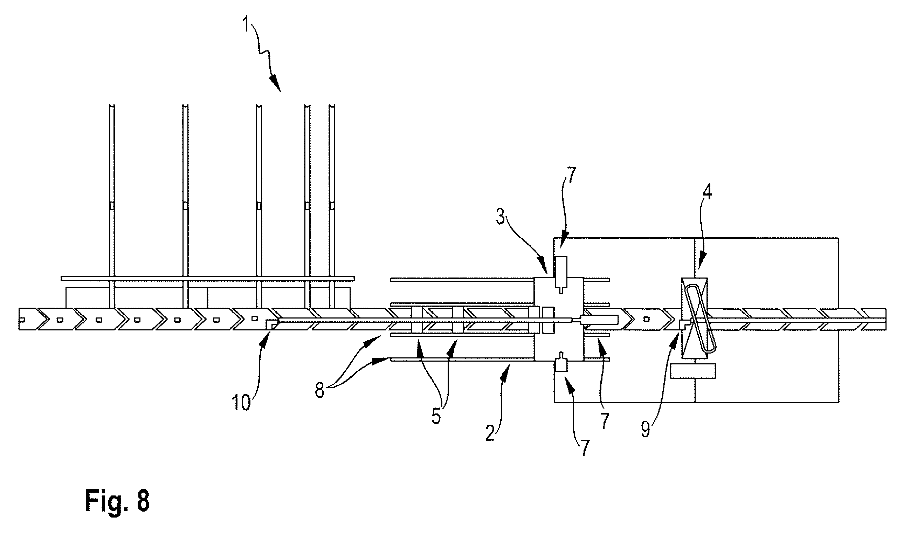

Nach Abschluss der Bearbeitungen in dem zweiten Takt hat die Säge 4 einen Trägeranfang (Abfall) abgetrennt. Dieser wird nun abgeführt, wonach für einen dritten Takt der Materialvorschub auf die nächste Bearbeitungsposition erfolgt. Der dritte Takt ist in Figur 8 dargestellt und beinhaltet Sägen (Abtrennen eines ersten Fertigteils) und Bohren am Ende eines zweiten Fertigteils. Ist die Sägebearbeitung beendet, ist damit das erste Fertigteil hergestellt und wird abgeführt. Alle Bohrungen für das zweite Fertigteil sind nach dem dritten Takt ebenfalls hergestellt, so dass die Bearbeitung des ersten Werkstücks durch das Bohrzentrum abgeschlossen ist. Das Bohrzentrum steht damit für die Bearbeitung des nächsten Werkstücks/Rohmaterials zur Verfügung.

In einem nicht dargestellten vierten Takt erfolgen schließlich die Kopfbearbeitung (Bohren) an dem zweiten Werkstück (zweite Steuerungsinstanz) und der Heckschnitt an dem ersten Werkstück (erste Steuerungsinstanz). Nach dem Heckschnitt ist auch das zweite Werkstück vollständig bearbeitet und wird zusammen mit dem Reststück abgeführt, worauf die erste Steuerungsinstanz beendet wird.

Der erste Messwagen 9 ist nun frei und zieht einen Greifer zurück, so dass er an dem zweiten Werkstück vorbeifahren und den zweiten Messwagen 10 an dessen Ende ablösen kann. Der zweite Messwagen steht dann für ein drittes Werkstück bereit.

Der weitere Ablauf ist eine (mehrfache) Wiederholung des beschriebenen Ablaufes, bis alle Fertigteile hergestellt sind und das letzte Reststück abgeführt ist. Dann endet der Automatikablauf / das Programm.

### Bezugszeichenliste

- 1: Werkzeugmaschine
- 2: Führungseinrichtung
- 3: Bearbeitungseinrichtung
- 4: Trenneinrichtung
- 5: Spannstöcke
- 6: Gehrungseinrichtung
- 7: Aufnahmeeinrichtungen für rotierbare Werkzeuge
- 8: Führungsschienen der Führungseinrichtung
- 9: erster Vorschub-/Messwagen
- 10: zweiter Vorschub-/Messwagen

## Patentansprüche

1. Werkzeugmaschine (1) zur Bearbeitung eines Werkstücks, insbesondere eines Profilträgers, umfassend mindestens erste und zweite Bearbeitungseinrichtungen (3, 4), eine Führungseinrichtung (2) zur Führung oder Halterung der ersten und zweiten Bearbeitungseinrichtungen (3,4), mindestens eine Einspannvorrichtung (5) zum Einspannen des Werkstücks während der Bearbeitung durch die ersten und zweiten Bearbeitungseinrichtungen (3,4), und eine Steuereinrichtung zum Steuern der Werkzeugmaschine (1),
**dadurch gekennzeichnet, dass**
die erste Bearbeitungseinrichtung (3) entlang der Führungseinrichtung (2) in einer Vorschubrichtung des Werkstücks und relativ zu der zweiten Bearbeitungseinrichtung (4) beweglich ist.

2. Werkzeugmaschine nach Anspruch 1, wobei die Steuereinrichtung dazu ausgebildet ist, während der Bearbeitung eines ersten Werkstücks durch die zweite Bearbeitungseinrichtung (4) in einem oder mehreren parallelen Bearbeitungsschritten die Bearbeitung des ersten Werkstücks oder mindestens einem weiteren Werkstückes durch die erste Bearbeitungseinrichtung (3) zu steuern, wobei die erste Bearbeitungseinrichtung (3) während der parallelen Bearbeitungsschritte entlang der Führungseinrichtung (2) relativ zu der zweiten Bearbeitungseinrichtung (4) bewegt wird.

3. Werkzeugmaschine (1) nach Anspruch 1 oder 2, umfassend eine oder mehrere weitere Bearbeitungseinrichtungen, die jeweils relativ entlang der Führungseinrichtung (2) und relativ zu der zweiten Bearbeitungseinrichtung (4) beweglich sind, wobei die Steuereinrichtung dazu ausgebildet ist, während der Bearbeitung eines ersten Werkstücks durch die zweite Bearbeitungseinrichtung (4) in einem oder mehreren parallelen Bearbeitungsschritten die Bearbeitung des ersten Werkstücks oder eines zweiten Werkstücks und/oder weiterer Werkstücke durch die weiteren Bearbeitungseinrichtungen zu steuern, wobei die weiteren Bearbeitungseinrichtungen während der parallelen Bearbeitungsschritte entlang der Führungseinrichtung (2) relativ zu der zweiten Bearbeitungseinrichtung (4) und/oder zueinander bewegbar sind.

4. Werkzeugmaschine (1) nach einem der vorhergehenden Ansprüche, wobei die erste Bearbeitungseinrichtung (3) und/oder gegebenenfalls die weiteren Bearbeitungseinrichtungen jeweils zum Bearbeiten des Werkstücks mit mindestens einem rotierbarem Werkzeug und/oder die zweite Bearbeitungseinrichtung (4) zum Ablängen des Werkstücks ausgebildet ist.

5. Werkzeugmaschine (1) nach einem der vorhergehenden Ansprüche, wobei die zweite Bearbeitungseinrichtung (3) die in der Vorschubrichtung des Werkstücks vorderste Bearbeitungseinrichtung und feststehend ist.

6. Werkzeugmaschine (1) nach einem der vorhergehenden Ansprüche, wobei die erste Bearbeitungseinrichtung (3) durch ein entlang der Führungseinrichtung (2) bewegliches Portal gebildet ist, und das Portal mehrere Aufnahmeeinrichtungen (7) für jeweils ein rotierbares Werkzeug oder ein Trennwerkzeug umfasst.

7. Werkzeugmaschine (1) nach Anspruch 6, wobei die rotierbaren Werkzeuge jeweils relativ zueinander und/oder relativ zu dem Portal beweglich sind.

8. Werkzeugmaschine (1) nach einem der vorhergehenden Ansprüche, umfassend mindestens einen ersten und einen zweiten Vorschubwagen (9,10) zum Vorschub eines Werkstücks entlang der Führungseinrichtung (2), wobei die ersten und zweiten und gegebenenfalls weiteren Vorschubwagen (9,10) relativ zueinander beweglich und unabhängig voneinander ansteuerbar sind.

9. Werkzeugmaschine (1) nach Anspruch 8, umfassend eine Werkstückzufuhreinrichtung zum Zuführen eines Werkstücks zu dem ersten Vorschubwagen (9) in einer Richtung quer, insbesondere senkrecht zu der Führungseinrichtung (2).

10. Werkzeugmaschine (1) nach einem der vorhergehenden Ansprüche, wobei die Einspannvorrichtung einen oder mehrere Spannstöcke (5) zum Einspannen eines Werkstücks in einer Bearbeitungsposition umfasst, wobei die Spannstöcke (5) relativ zueinander und/oder relativ zu der ersten und/oder zweiten Bearbeitungseinrichtung (3,4) beweglich und/oder unabhängig voneinander ansteuerbar sind.

11. Werkzeugmaschine (1) nach einem der vorhergehenden Ansprüche, wobei die Bearbeitungseinrichtungen jeweils als Portal ausgebildet sind, und die Vorschubwagen und/oder die Spannstöcke derart ausgebildet sind, dass sie durch die Portale hindurch beweglich sind.

12. Werkzeugmaschine (1) nach einem der vorhergehenden Ansprüche, umfassend eine Messvorrichtung zur Messung eines oder mehrerer vorbestimmter Parameter der Werkstückbearbeitung, wobei die Steuereinrichtung dazu ausgebildet ist, eine Reihenfolge von Bearbeitungsschritten durch die erste und/oder zweite Bearbeitungseinrichtung (3,4) abhängig von Messergebnissen der Messvorrichtung abzuändern.

13. Werkzeugmaschine (1) nach einem der vorhergehenden Ansprüche, wobei die zweite Bearbeitungseinrichtung (4) ein Trennwerkzeug, insbesondere eine Säge umfasst, und/oder das mindestens eine rotierbares Werkzeug umfasst.

14. Verfahren zur Steuerung einer Werkzeugmaschine (1) nach einem der vorhergehenden Ansprüche, das Verfahren umfassend:
Empfangen, durch die Steuereinrichtung, von Parametern bezüglich zu bearbeitender Werkstücke und vorgesehener Bearbeitungen an den Werkstücken;
Bestimmen, durch die Steuereinrichtung, auf Grundlage der empfangenen Parameter, einer Reihenfolge von Bearbeitungsschritten, wobei die Bearbeitungsschritte durch die erste und/oder gegebenenfalls weiteren Bearbeitungseinrichtungen und die zweite Bearbeitungseinrichtung (4) zumindest zeitweise gleichzeitig durchgeführt werden; und
Erzeugen, durch die Steuereinrichtung, von Steuersignalen für die Werkstückzufuhreinrichtung, die ersten und/oder weiteren Vorschubeinrichtungen (9,10), und/oder die Bearbeitungseinrichtungen, zur Durchführung der Bearbeitungsschritte in der bestimmten Reihenfolge.

15. Verfahren nach Anspruch 14, umfassend:
Anpassen, durch die Steuereinrichtung, der Reihenfolge der Bearbeitungsschritte in Reaktion auf eine Änderung der Parameter oder den Empfang neuer Parameter während Werkstückbearbeitung; und
Erzeugen, durch die Steuereinrichtung, von neuen Steuersignalen gemäß der angepassten Reihenfolge.

16. Verfahren nach Anspruch 14 oder 15 wobei die Parameter Informationen über Dimensionen der Werkstücke, Art der vorgesehenen Bearbeitungen, und Position der vorgesehenen Bearbeitungen enthalten, das Verfahren umfassend:
Bestimmen, durch die Steuereinrichtung, abhängig von den Dimensionen der Werkstücke, der Art der vorgesehenen Bearbeitungen und der Position der vorgesehenen Bearbeitungen, einer ersten Reihenfolge, in der die Werkstücke bearbeitet werden, und einer zweiten Reihenfolge von durch die ersten und zweiten Bearbeitungseinrichtungen (3,4) durchzuführenden Bearbeitungsschritten; und
Erzeugen, durch die Steuereinrichtung, von Steuersignalen für die Werkstückzufuhreinrichtung, die ersten und/oder zweiten Vorschubeinrichtungen (9,10), und/oder die ersten und/oder zweiten Bearbeitungseinrichtung (3,4)en, zur Durchführung der Werkstückbearbeitung gemäß den ersten und zweiten Reihenfolgen.

17. Verfahren nach einem der Ansprüche 14 bis 16, wobei die Steuereinrichtung die erste Bearbeitungseinrichtung (3) derart steuert, dass während der Bearbeitung eines der Werkstücke durch die zweite Bearbeitungseinrichtung (4) wahlweise eine gleichzeitige Bearbeitung desselben oder eines anderen Werkstückes erfolgt.

18. Verfahren nach Anspruch 17, wobei die Steuereinrichtung die Bearbeitungseinrichtungen derart steuert, dass die erste und/oder gegebenenfalls die weiteren Bearbeitungseinrichtung während der Werkstückbearbeitung durch die zweite Bearbeitungseinrichtung (4) relativ zu der zweiten Bearbeitungseinrichtung (4) und relativ zueinander bewegt werden.

19. Verfahren nach einem der Ansprüche 14 bis 18, umfassend:
zunächst Steuerung, durch die Steuereinrichtung, der ersten Bearbeitungseinrichtung (3) und/oder gegebenenfalls der weiteren Bearbeitungseinrichtungen zum Durchführen von allen Bearbeitungen, die innerhalb eines vorbestimmten Abstandes von einer vorgesehenen Position für eine Bearbeitung durch die zweite Bearbeitungseinrichtung (4) liegen;
danach Steuerung, durch die Steuereinrichtung, der Vorschubeinrichtung (9,10) zum Verschieben des Werkstücks, so dass die zweite Bearbeitungseinrichtung (4) an der vorgesehenen Position angeordnet ist; und danach Steuerung, durch die Steuereinrichtung, der zweiten Bearbeitungseinrichtung (4) zur Bearbeitung des Werkstücks an der vorgesehen Position und der ersten Bearbeitungseinrichtung (3) zur gleichzeitigen Bearbeitung des Werkstücks an mindestens einer Position, die außerhalb des vorbestimmten Abstandes von der vorgesehenen Position liegt.

20. Verfahren nach einem der Ansprüche 14 bis 19, umfassend, im Anschluss an die Bestimmung der ersten und zweiten Reihenfolgen, das Bestimmen, durch die Steuereinrichtung, einer dritten Reihenfolge von durch die rotierbaren Werkzeuge der ersten Bearbeitungseinrichtung (3) durchzuführenden Bearbeitungsschritten, wobei diese Bearbeitungsschritte eine Bewegung der rotierbaren Werkzeuge innerhalb des Portals umfassen können, aber keine Bewegung der ersten Bearbeitungseinrichtung (3) relativ zu der zweiten Bearbeitungseinrichtung (4) erfordern.

21. Verfahren nach einem der Ansprüche 14 bis 20, umfassend:
Bestimmen, durch die Steuereinrichtung, mittels von einer Messeinrichtung gelieferten Messdaten, ob ein zur Bearbeitung in die Werkzeugmaschine (1) zugeführtes Werkstück dem nächsten gemäß der bestimmten ersten Reihenfolge zu bearbeitenden Werkstück entspricht; und
falls das zugeführte Werkstück nicht dem nächsten zu bearbeitenden Werkstück entspricht, Bestimmen, durch die Steuereinrichtung, ob das zugeführte Werkstück einem später zu bearbeitenden Werkstück entspricht und, falls das zugeführte Werkstück einem später zu bearbeitenden Werkstück entspricht, Anpassen, durch die Steuereinrichtung, zumindest der ersten Reihenfolge.

22. Verfahren nach einem der Ansprüche 14 bis 21, umfassend:
Bestimmen, durch die Steuereinrichtung, anhand der Position eines gerade bearbeiteten Werkstücks, ob der Werkzeugmaschine (1) das nächste Werkstück zugeführt werden kann, und gegebenenfalls Steuern, durch die Steuereinrichtung, der Werkstückzufuhreinrichtung, so dass der Werkzeugmaschine (1) das nächste vorgesehene Werkstück zugeführt wird.

23. Verfahren nach einem der Ansprüche 14 bis 22, umfassend:
Bestimmen, durch die Steuereinrichtung, während der Bearbeitung eines Werkstücks durch die zweite Bearbeitungseinrichtung (4), ob mindestens ein weiterer bisher nicht zu diesem Zeitpunkt vorgesehener Bearbeitungsschritt durch die erste und/oder die gegebenenfalls die weiteren Bearbeitungseinrichtungen (3) zumindest teilweise gleichzeitig zu der Bearbeitung des Werkstücks durch die zweite Bearbeitungseinrichtung (4) durchgeführt werden kann, und gegebenenfalls Steuerung, durch die Steuereinrichtung, der ersten und/oder gegebenenfalls der weiteren Bearbeitungseinrichtungen (3) zur zumindest teilweise gleichzeitigen Durchführung des weiteren Bearbeitungsschritte.

24. Verfahren nach einem der Ansprüche 14 bis 23, umfassend:
Messen, durch die Steuereinrichtung, der Dauer für die Durchführung von einem oder mehreren der Bearbeitungsschritte durch die erste und/oder zweite und/oder gegebenenfalls weiteren Bearbeitungseinrichtungen (3,4);
Vergleichen, durch die Steuereinrichtung, der gemessenen Werte mit gespeicherten, der Bestimmung der ersten, zweiten und/oder dritten Reihenfolgen zu Grunde liegenden Werten; und
Anpassen, durch die Steuereinrichtung, der ersten und/oder zweiten und/oder dritten Reihenfolge, abhängig von dem Ergebnis des Vergleichs.

25. Steuereinrichtung, eingerichtet oder programmiert zur Durchführung eines Verfahrens nach einem der Ansprüche 14 bis 24.

26. Computerprogramm, umfassend maschinenlesbare Befehle, die bei Ausführung durch eine computerimplementierte Steuereinrichtung die Ausführung eines Verfahrens nach einem der Ansprüche 14 bis 24 veranlassen.
